# EUROPÄISCHE PATENTSCHRIFT

(11) **EP 3 163 263 B1**
(45) Veröffentlichungstag und Bekanntmachung des Hinweises auf die Patenterteilung: **29.08.2018**
(21) Anmeldenummer: 16193070.6
(22) Anmeldetag: 10.10.2016
(51) Int. Cl.: G01F 23/26

(54) **FÜLLSTANDSBESTIMMUNGSEINRICHTUNG UND FLUIDBEHÄLTERANORDNUNG**
LEVEL METER AND FLUID CONTAINER ASSEMBLY
DISPOSITIF DE DÉTERMINATION DU NIVEAU DE REMPLISSAGE ET SYSTÈME DE RÉCIPIENT DE FLUIDE

(30) Priorität: 28.10.2015 DE 102015013886
(43) Veröffentlichungstag der Anmeldung: 03.05.2017
(73) Patentinhaber: AUDI AG, 85045 Ingolstadt (DE)
(72) Erfinder: Aigner, Konrad, 93333 Neustadt-Hienheim (DE); Schwenkert, Michael, 85051 Ingolstadt (DE)

(56) Entgegenhaltungen:
- WO-A1-2014/052997
- DE-A1- 4 128 793
- DE-A1- 10 309 769
- DE-A1-102007 027 707
- DE-A1-102014 000 667
- GB-A- 2 074 325
- GB-A- 2 295 019
- US-A- 3 343 415
- US-A- 3 377 861
- US-A1- 2011 079 078

## Beschreibung

Die Erfindung betrifft eine Füllstandsbestimmungseinrichtung zur kapazitiven Bestimmung des Füllstands in einem Fluidbehälter. Die Erfindung betrifft weiterhin eine Fluidbehälteranordnung.

Die Füllstandsbestimmungseinrichtung ist dem Fluidbehälter zugeordnet. In dem Fluidbehälter beziehungsweise in dessen Innenraum kann ein Fluid mit einem bestimmten Füllstand vorliegen, wobei der Füllstand beispielsweise die Füllhöhe des Fluids in dem Fluidbehälter und/oder das von dem Fluid in dem Fluidbehälter eingenommene Fluidvolumen beschreibt. Die Füllstandsbestimmungseinrichtung ist dazu vorgesehen, den Füllstand des Fluids in dem Fluidbehälter zu bestimmen. Zu diesem Zweck weist sie mehrere erste Elektroden und mehrere zweite Elektroden auf. Die Füllstandsbestimmungseinrichtung arbeitet kapazitiv, also auf Grundlage der zwischen der ersten Elektrode und der zweiten Elektrode festgestellten Kapazität und/oder Kapazitätsänderung. Diese verändert sich aufgrund des zwischen der ersten Elektrode und der zweiten Elektrode angeordneten Dielektrikums, welches in dem Fluidbehälter vorliegt. Ist der Füllstand des Fluidbehälters ausreichend, damit die erste Elektrode und/oder die zweite Elektrode im Bereich des Fluids vorliegen, so wird das zwischen den beiden Elektroden vorliegende Dielektrikum zumindest teilweise, besonders bevorzugt vollständig, von dem Fluid gebildet.

Die Elektroden sind dem Innenraum des Fluidbehälters zugewandt angeordnet beziehungsweise anordenbar und/oder in dem Innenraum angeordnet beziehungsweise anordenbar. Beispielsweise sind sie an einer den Innenraum begrenzenden Innenwand des Fluidbehälters angeordnet oder in diese integriert. Somit können die Elektroden beispielsweise auf der den Innenraum begrenzenden Seite der Innenwand und mithin in dem Innenraum selbst angeordnet sein. Selbstverständlich ist es jedoch auch möglich, dass die Elektroden auf der dem Innenraum abgewandten Seite der Innenwand oder in der Innenwand und entsprechend außerhalb des Innenraums angeordnet sind. Auch eine Anordnung der Füllstandsbestimmungseinrichtung als solches, die die mehreren ersten Elektroden und die mehreren zweiten Elektroden aufweist, in dem Fluidbehälter beziehungsweise in dem Innenraum des Fluidbehälters, insbesondere zumindest bereichsweise beabstandet von der Innenwand, kann vorgesehen sein.

Das in dem Fluidbehälter vorliegende Fluid kann in Abhängigkeit von den vorherrschenden Umgebungsbedingungen in wechselnden Aggregatzuständen vorliegen. Gefriert das Fluid, so tritt häufig eine Vergrößerung des Fluidvolumens auf. Bei einem solchen Wechsel des Aggregatzustands kann es insoweit zu einer mechanischen Kraftbeaufschlagung, insbesondere zu einer Druckbeaufschlagung, der ersten Elektrode und/oder der zweiten Elektrode kommen. Übersteigt diese ein bestimmtes Ausmaß, so kann es zu einer Verformung der Füllstandsbestimmungseinrichtung, insbesondere der ersten Elektrode und/oder der zweiten Elektrode kommen.

Es ist nun Aufgabe der Erfindung, eine Füllstandsbestimmungseinrichtung zur kapazitiven Bestimmung des Füllstands in dem Fluidbehälter vorzuschlagen, welche gegenüber bekannten Füllstandsbestimmungseinrichtungen Vorteile aufweist, insbesondere gegenüber mechanischen Beanspruchungen, beispielsweise aufgrund von einem Wechsel des Aggregatzustands des Fluids, besonders widerstandsfähig ist.

Dies wird erfindungsgemäß mit einer Füllstandsbestimmungseinrichtung mit den Merkmalen des Anspruch 1 erzielt.

Erfindungsgemäß ist vorgesehen, dass die mehreren ersten Elektroden und die mehreren zweiten Elektroden derart angeordnet sind, dass - im Querschnitt oder Längsschnitt gesehen - Mittelebenen der ersten Elektroden und Mittelebenen der zweiten Elektroden gegeneinander angewinkelt sind. Jede der Elektroden weist also eine Mittelebene auf. Die Mittelebene der ersten Elektrode kann auch als erste Mittelebene und die Mittelebene der zweiten Elektrode als zweite Mittelebene bezeichnet werden.

Beispielsweise nimmt jede der Mittelebenen der Elektroden den Schwerpunkt der entsprechenden Elektrode auf. Insbesondere erstreckt sich die jeweilige Mittelebene in zwei aufeinander senkrecht stehende Richtungen, in welchen die entsprechende Elektrode die größeren Abmessungen aufweist und ist dabei hinsichtlich einer dritten Richtung, welche auf den beiden vorstehend genannten Richtungen jeweils senkrecht steht, mittig in der Elektrode aufgenommen. Alternativ kann es selbstverständlich vorgesehen sein, dass jede der Mittelebenen von einer planen, dem Innenraum des Fluidbehälters zugewandten Messfläche der jeweiligen Elektrode definiert ist. Diese Mittelebene ist üblicherweise gegenüber der vorstehend beschriebenen Mittelebene parallel versetzt angeordnet, nämlich in Richtung des Innenraums versetzt.

Es ist nun vorgesehen, dass die erste Mittelebene gegenüber der zweiten Mittelebene angewinkelt ist, also mit dieser einen Winkel von größer als 0° und kleiner als 180° einschließt. Besonders bevorzugt beträgt der Winkel zwischen den Mittelebenen mindestens 60° und höchstens 120°, mindestens 70° und höchstens 110°, mindestens 80° und höchstens 100°, mindestens 85° und höchstens 95° oder genau 90°. Alternativ kann selbstverständlich der Winkel zwischen einer Messfläche der ersten Elektrode und einer Messfläche der zweiten Elektrode vorliegen, sodass also gilt, dass die erste Elektrode und die zweite Elektrode derart angeordnet sind, dass eine Messfläche der ersten Elektrode und eine Messfläche der zweiten Elektrode gegeneinander angewinkelt sind. Die Ausführungen hinsichtlich der Mittelebenen können hierbei analog herangezogen werden.

Aufgrund der gegeneinander angewinkelten Elektroden wird das in dem Fluidbehälter vorliegende Fluid bei einer Änderung seines Aggregatzustands von den Elektroden fortgeleitet und kann insoweit lediglich eine geringere Kraft beziehungsweise einen geringeren Druck auf diese ausüben. Entsprechend wird eine Beschädigung der Füllstandsbestimmungseinrichtung, insbesondere der Elektroden, effektiv verhindert.

Selbstverständlich können die erste Elektrode und/oder die zweite Elektrode in wenigstens eine Richtung, insbesondere in Richtung ihrer größten Erstreckung, gekrümmt sein. Insbesondere weisen Sie über den gesamten Verlauf in diese Richtung dieselbe Krümmung auf, sodass sie beispielsweise in Kreisform angeordnet sind. In diesem Fall ist jede der Mittelebenen in dem Querschnitt definiert und verläuft insoweit in dem Querschnitt tangential zu der jeweiligen Elektrode.

In einer weiteren Ausgestaltung der Erfindung ist vorgesehen, dass die erste Elektrode und die zweite Elektrode unmittelbar benachbart zueinander angeordnet sind. Beispielsweise grenzen die beiden Elektroden in wenigstens einer Richtung unmittelbar aneinander an; zumindest liegt jedoch - auch bei voneinander beabstandeter Anordnung der Elektroden - keine weitere Elektrode zwischen ihnen vor. Aufgrund ihrer gegeneinander angewinkelten Ausrichtung können die unmittelbar benachbart zueinander angeordneten Elektroden einander gegenüberliegen, sodass die Messfläche der ersten Elektrode auf der der zweiten Elektrode zugewandten Seite der ersten Elektrode liegt und umgekehrt.

In einer weiteren bevorzugten Ausgestaltung der Erfindung ist vorgesehen, dass die erste Elektrode und die zweite Elektrode auf demselben Substrat angeordnet und/oder ausgebildet sind. Als Substrat liegt beispielsweise eine Leiterplatte oder dergleichen vor. Insbesondere sind die erste Elektrode und die zweite Elektrode in Form einer Leiterbahn auf dem Substrat ausgeführt, beispielsweise durch ätzen. Das Substrat ist vorzugsweise an der Innenwand des Fluidbehälters angeordnet beziehungsweise befestigt, besonders bevorzugt auf der dem Innenraum des Fluidbehälters zugewandten Seite der Innenwand. Es kann jedoch auch in der Innenwand aufgenommen sein, beispielsweise ist es in die Innenwand eingegossen. Selbstverständlich können die erste Elektrode und die zweite Elektrode auch auf separaten Substraten vorliegen. In diesem Fall kann es vorgesehen sein, dass ein erstes der Substrate mehrere erste Elektroden und ein zweites der Substrate mehrere zweite Elektroden aufweist.

Die vorliegende Erfindung sieht vor, dass die mehreren ersten Elektroden und die mehreren zweiten Elektroden im Querschnitt oder Längsschnitt gesehen V-förmig zueinander angeordnet sind, wobei die erste Elektrode und die zweite Elektrode in einer gemeinsamen Ausnehmung angeordnet sind, die an einem Trägerelement der Füllstandsbestimmungseinrichtung ausgebildet ist. Die V-Form beziehungsweise V-Anordnung wird durch zwei Ebenen beziehungsweise Geraden definiert, welche sich unter einem bestimmten Winkel schneiden. Der Winkel ist größer als 0° und beträgt vorzugsweise höchstens 120°, höchstens 110°, höchstens 100°, höchstens 90°, höchstens 80°, höchstens 70° oder höchstens 60°. Selbstverständlich kann der Winkel jedoch auch kleiner sein.

Die erste Elektrode und die zweite Elektrode sind nun einander gegenüberliegend beziehungsweise miteinander gegenüberliegenden Messflächen an der V-Form angeordnet, wobei die erste Elektrode auf einer ersten der Ebenen beziehungsweise Geraden und die zweite Elektrode auf einer zweiten der Ebenen beziehungsweise Geraden vorliegt. Beispielsweise weist die gemeinsame Ausnehmung die V-Form auf. Die Ausnehmung beziehungsweise Vertiefung liegt an dem Trägerelement der Füllstandsbestimmungseinrichtung vor, wobei beispielsweise ein Scheitelpunkt der Ausnehmung auf der dem Innenraum des Fluidbehälters abgewandten Seite des Trägerelements liegt. Die Ausnehmung öffnet sich mithin bevorzugt in Richtung des Innenraums. Aufgrund dieser Ausgestaltung kann das Fluid bei einer Zunahme seines Fluidvolumens, beispielsweise aufgrund der Änderung des Aggregatzustands, aus der Ausnehmung heraus gelangen, ohne dass auf die Elektroden eine Kraft beziehungsweise ein Druck wirkt, welche/welcher zu einer Beschädigung führen könnte.

Die erste Elektrode und die zweite Elektrode können grundsätzlich beliebig zueinander angeordnet sein, beispielsweise übereinander oder nebeneinander. Insbesondere kann es vorgesehen sein, dass mehrere erste Elektroden und mehrere zweite Elektroden in einer Richtung abwechselnd angeordnet sind, sodass zu jeder ersten Elektrode unmittelbar benachbart eine zweite Elektrode vorliegt. Selbstverständlich kann es auch vorgesehen sein, dass mehrere erste Elektrode in einer ersten Reihe und mehrere zweite Elektroden in einer zweiten Reihe vorliegen, wobei die zweite Reihe vorzugsweise benachbart parallel zu der ersten Reihe verläuft. Jeweils eine der ersten Elektroden ist somit neben einer der zweiten Elektroden angeordnet und dabei bezüglich dieser angewinkelt.

In einer weiteren bevorzugten Ausgestaltung der Erfindung ist vorgesehen, dass die erste Elektrode und/oder die zweite Elektrode in einer auf der jeweiligen Mittelebene senkrecht stehenden Richtung plan oder wenigstens bereichsweise gekrümmt, insbesondere über die gesamte Erstreckung in dieser Richtung gekrümmt, verlaufen. Die Richtung, in welcher die Krümmung vorliegt oder die jeweilige Elektrode plan ist, kann gemäß den vorstehenden Ausführungen der Richtung der größten Längserstreckung der jeweiligen Elektrode entsprechen. Beispielsweise liegen die Elektroden an der Innenwand des Fluidbehälters an und sind entsprechend an diese formangepasst. Selbstverständlich können sie jedoch an einem zusätzlichen Element, beispielsweise dem Trägerelement, vorgesehen sein, welches in dem Innenraum des Fluidbehälters angeordnet ist.

Beispielsweise ist die erste Elektrode beziehungsweise die zweite Elektrode in der auf der Mittelebene senkrecht stehenden Richtung über ihre gesamte Erstreckung plan. Ist sie dagegen in dieser Richtung gekrümmt, so kann die Krümmung lediglich teilweise oder ebenfalls über die gesamte Erstreckung vorliegen. Besonders bevorzugt weist die Krümmung einen über ihre Erstreckung konstanten Krümmungsradius auf.

In einer weiteren Ausgestaltung der Erfindung ist vorgesehen, dass die erste Elektrode und/oder die zweite Elektrode - zumindest im Querschnitt oder Längsschnitt gesehen - jeweils eine Längsmittelachse aufweisen, die parallel zu einer eine Vertikalmittelachse des Fluidbehälters aufnehmenden oder senkrecht auf ihr stehenden gedachten Ebene angeordnet ist. Die Längsmittelachse der jeweiligen Elektrode fällt beispielsweise zumindest im Querschnitt mit der jeweiligen Mittelebene der Elektrode zusammen beziehungsweise ist in dieser aufgenommen. Die Längsmittelachse der jeweiligen Elektrode verläuft in Richtung ihrer größten Erstreckung und ist dabei in den beiden auf dieser Richtung und aufeinander senkrecht stehenden Richtungen jeweils mittig bezüglich der entsprechenden Elektrode angeordnet.

Die Längsmittelachse soll parallel zu der gedachten Ebene angeordnet sein. Diese nimmt die Vertikalmittelachse des Fluidbehälters auf oder steht senkrecht auf ihr. Unter der Vertikalmittelachse des Fluidbehälters ist eine Längsmittelachse des Fluidbehälters in geodätisch vertikaler Richtung zu verstehen, verläuft also beabstandet von der Innenwand des Fluidbehälters und durchgreift einen Boden und eine Decke desselben. Die Elektroden können insoweit grundsätzlich beliebig in dem Fluidbehälter angeordnet sein. Beispielsweise verlaufen sie geodätisch waagrecht oder geodätisch senkrecht.

Schließlich können in einer weiteren Ausgestaltung der Erfindung eine Vielzahl von ersten Elektroden mit zueinander parallelen Mittelebenen und/oder eine Vielzahl von zweiten Elektroden mit zueinander parallelen Mittelebenen vorgesehen sein. Die vorstehend beschriebene erste Elektrode bildet dabei einen Bestandteil der Vielzahl von ersten Elektroden, während die zweite Elektrode Bestandteil der Vielzahl von zweiten Elektroden ist. Vorstehend wurde bereits erläutert, dass die Mittelebenen der ersten Elektrode und der zweiten Elektrode gegeneinander angewinkelt sind. Weiterhin sollen nun die Mittelebenen mehrerer erster Elektroden, vorzugsweise aller ersten Elektroden, zueinander parallel verlaufen oder ineinander fallen. Dies gilt entsprechend für die zweiten Elektroden beziehungsweise deren Mittelebenen.

Die Erfindung betrifft weiterhin eine Fluidbehälteranordnung, mit einem Fluidbehälter und einer Füllstandsbestimmungseinrichtung zur kapazitiven Bestimmung des Füllstands in den Fluidbehälter, insbesondere einer Füllstandsbestimmungseinrichtung gemäß den vorstehenden Ausführungen, wobei die Füllstandsbestimmungseinrichtung über mehrere erste Elektroden sowie mehrere zweite Elektroden verfügt, die einem Innenraum des Fluidbehälters zugewandt oder in dem Innenraum angeordnet sind. Dabei ist vorgesehen, dass die erste Elektrode und die zweite Elektrode derart angeordnet sind, dass - zumindest im Querschnitt oder Längsschnitt gesehen - eine Mittelebene der ersten Elektrode und eine Mittelebene der zweiten Elektrode gegeneinander angewinkelt sind, wobei die ersten Elektroden und die zweiten Elektroden im Querschnitt oder Längsschnitt gesehen V-förmig zueinander sowie in einer Richtung abwechselnd angeordnet sind, und wobei jeweils eine der ersten Elektroden und eine der zweiten Elektroden in einer gemeinsamen Ausnehmung angeordnet sind, die an einem Trägerelement der Füllstandsbestimmungseinrichtung ausgebildet ist.

Auf die Vorteile einer derartigen Ausgestaltung der Fluidbehälteranordnung beziehungsweise der Füllstandsbestimmungseinrichtung wurde bereits eingegangen. Sowohl die Fluidbehälteranordnung als auch die Füllstandsbestimmungseinrichtung können gemäß den vorstehenden Ausführungen weitergebildet sein, sodass insoweit auf diese verwiesen wird.

Weiterhin kann vorgesehen werden, dass ein der Kapazität zwischen der ersten Elektrode und der zweiten Elektrode und/oder zwischen der ersten Elektrode und einer weiteren ersten Elektrode und/oder einer weiteren zweiten Elektrode entsprechender Kapazitätsmesswert ermittelt wird. Grundsätzlich kann es also vorgesehen sein, die Elektroden beliebig zu verschalten. Beispielsweise wird der Kapazitätsmesswert für die erste Elektrode und die zweite Elektrode ermittelt. Zusätzlich oder alternativ wird der Kapazitätsmesswert zwischen der ersten Elektrode und einer weiteren Elektrode ermittelt, wobei die Mittelebenen der ersten Elektrode sowie der weiteren ersten Elektrode vorzugsweise parallel zueinander verlaufen. Ebenso kann es vorsehen sein, dass der Kapazitätsmesswert zwischen der ersten Elektrode und der weiteren zweiten Elektrode bestimmt wird. Hierbei sind die Mittelebenen der ersten Elektrode und der weiteren zweiten Elektrode besonders bevorzugt gegeneinander angewinkelt, insbesondere gemäß den vorstehenden Ausführungen.

Beispielsweise wird die erste Elektrode, die zweite Elektrode, die weitere erste Elektrode oder die weitere zweite Elektrode als Referenzelektrode herangezogen. Unter der Referenzelektrode ist eine Elektrode zu verstehen, welche vorzugsweise permanent zumindest teilweise mit Fluid benetzt ist oder in deren Bereich Fluid vorliegt. Selbstverständlich kann die Referenzelektrode dynamisch gewählt werden, sodass beispielsweise bei einem ersten Füllstand eine andere Elektrode als Referenzelektrode herangezogen wird als bei einem von dem ersten Füllstand verschiedenen zweiten Füllstand.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Schnittdarstellung einer Füllstandsbestimmungseinrichtung für eine Fluidbehälteranordnung mit einem Fluidbehälter,
- Figur 2: eine weitere Schnittdarstellung der Füllstandsbestimmungseinrichtung,
- Figur 3: eine Querschnittsdarstellung eines Bereichs der Füllstandsbestimmungseinrichtung in einer möglichen Ausführungsform,
- Figur 4: eine Draufsicht auf einen Bereich der Füllstandsbestimmungseinrichtung in einer zweiten Ausführungsform, sowie
- Figur 5: eine Schnittdarstellung der Füllstandsbestimmungseinrichtung in der zweiten Ausführungsform.

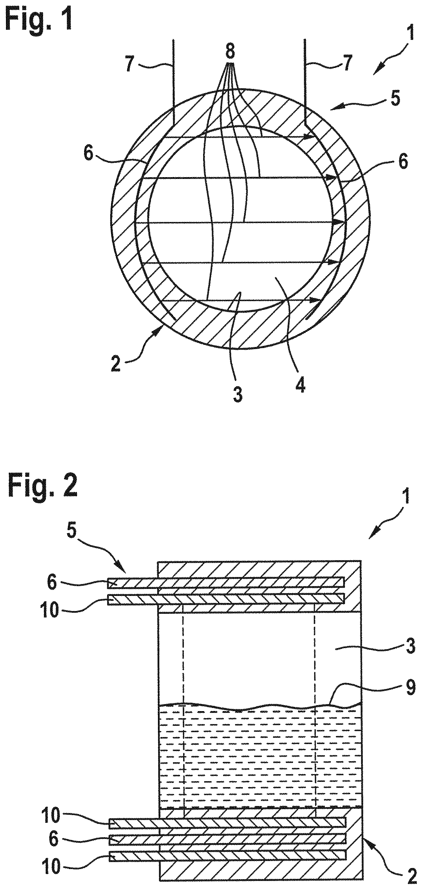

Die Figur 1 zeigt eine Schnittdarstellung einer Füllstandsbestimmungseinrichtung 1, die zur Bestimmung des Füllstands in einem Fluidbehälter einer Fluidbehälteranordnung verwendbar ist. Die Füllstandsbestimmungseinrichtung 1 weist ein Trägerelement 2 auf, das einen von einer Innenwand 3 begrenzten Innenraum 4 aufweist. Das Trägerelement 2 ist zum Beispiel zylindrisch, insbesondere kreiszylindrisch. In dem Innenraum 4 kann ein Fluid vorliegen, das in dem Fluidbehälter der Fluidbehälteranordnung zwischengespeichert ist. Als Fluid wird beispielsweise ein Reduktionsmittel, insbesondere eine Harnstofflösung, verwendet. In dem hier dargestellten Ausführungsbeispiel ist der Innenraum 4 im Schnitt rund. Es versteht sich jedoch von selbst, dass das Trägerelement 2 beziehungsweise der Innenraum grundsätzlich jede beliebige Form aufweisen kann.

Die Füllstandsbestimmungseinrichtung 1 weist neben dem Trägerelement 2 eine Elektrodenanordnung 5 auf. Diese verfügt über zwei gegenüberliegende Elektroden 6, welche im Folgenden als erste Elektroden 6 bezeichnet werden. Die Elektroden 6 sind über Anschlüsse 7 elektrisch kontaktierbar, sodass eine zwischen ihnen vorliegende Kapazität in Form eines Kapazitätsmesswerts ermittelt werden kann. Anhand des Kapazitätsmesswerts kann anschließend auf den Füllstand des Fluidbehälters mit dem Fluid geschlossen werden. Die während der Messung sich ausbildenden Feldlinien sind rein beispielhaft durch die Pfeile 8 angedeutet. Es wird deutlich, dass die Elektroden 6 in Richtung ihrer größten Erstreckung gekrümmt sind. Selbstredend können sie in dieser Richtung jedoch auch gerade sein.

Die Figur 2 zeigt eine weitere Schnittdarstellung der Füllstandsbestimmungseinrichtung 1. Erkennbar sind wiederum das Trägerelement 2 sowie die Elektrodenanordnung 5. Der momentane Füllstand des Fluidbehälters mit dem Fluid ist durch die Linie 9 angedeutet. Es wird deutlich, dass die Elektrodenanordnung 5 eine Vielzahl von Elektroden aufweist, welche geodätisch übereinander angeordnet sind. Dabei liegen sowohl erste Elektroden 6 als auch zweite Elektroden 10 vor. Vorzugsweise wechseln sich in geodätisch vertikaler Richtung erste Elektroden 6 mit zweiten Elektroden 10 ab, vornehmlich über einen Großteil der Vertikalerstreckung des Trägerelements 2 beziehungsweise des Innenraums 4. Dies ist hier lediglich angedeutet. Die zweiten Elektroden 10 sind bevorzugt analog zu den ersten Elektroden 6 gemäß den vorstehenden Ausführungen ausgebildet.

In der hier dargestellten Ausführungsform sind die Elektroden 6 und 10 an dem Trägerelement 2 angeordnet beziehungsweise an diesem befestigt. Es kann jedoch auch vorgesehen sein, dass die Elektroden 6 und 10 unmittelbar an oder in einer Wand des Fluidbehälters vorliegen, beispielsweise in diese eingegossen werden.

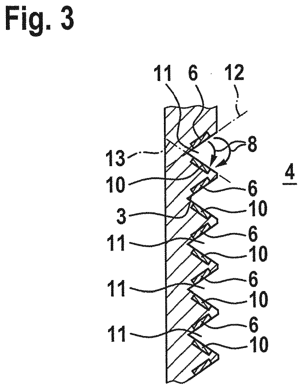

Die Figur 3 zeigt einen Querschnitt durch einen Bereich der Füllstandsbestimmungseinrichtung 1 in einer möglichen Ausführungsform. Beispielsweise entspricht die Füllstandsbestimmungseinrichtung 1 der vorstehend beschriebenen. Erneut wird darauf hingewiesen, dass die Elektroden 6 und 10, insbesondere in Richtung ihrer größten Erstreckung, gerade oder gekrümmt sein können. Es wird deutlich, dass die ersten Elektroden 6 sowie die zweiten Elektroden 10 an der Innenwand 3 angeordnet beziehungsweise befestigt sind. Beispielsweise ist jeweils einer ersten Elektrode 6 sowie einer zweiten Elektrode 10 eine Ausnehmung 11 zugeordnet, die in der dem Innenraum 4 zugewandten Seite der Innenwand 3 vorliegt. Die Ausnehmung 11 ist dabei im Querschnitt gesehen V-förmig und weist insoweit zwei sich unter einem bestimmten Winkel schneidende Schenkel auf. An einem ersten der Schenkel ist nun die erste Elektrode 6 und an einem zweiten der Schenkel die zweite Elektrode 10 angeordnet. Die erste Elektrode 6 sowie die zweite Elektrode 10 liegen sich also in der Ausnehmung 11 unmittelbar gegenüber.

Der ersten Elektrode 6 sowie der zweiten Elektrode 10 ist nun jeweils eine gedachte Mittelebene 12 beziehungsweise 13 zugeordnet. Es wird deutlich, dass die Mittelebenen 12 und 13 gegeneinander angewinkelt sind, also einen Winkel miteinander einschließen, der größer als 0 und kleiner als 180° ist. Rein beispielhaft ist hier ein Winkel von 90° dargestellt. Ebenso beispielhaft sind für die Elektroden 6 die sich während der Bestimmung des Füllstands ausbildenden Feldlinien durch die Pfeile 8 angedeutet.

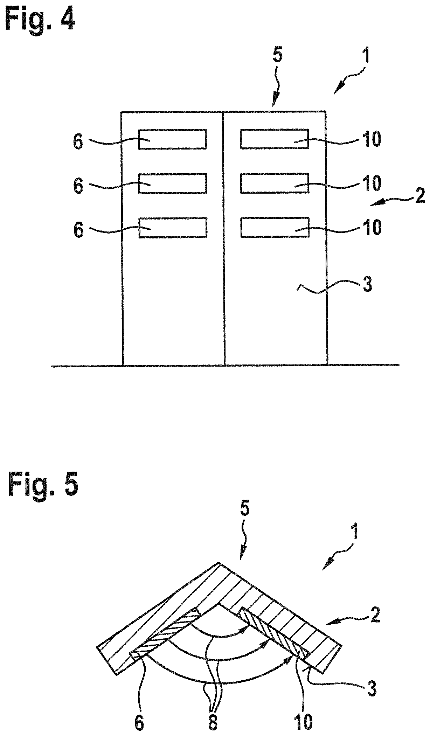

Die Figur 4 zeigt eine zweite Ausführungsform der Füllstandsbestimmungseinrichtung 1. Grundsätzlich wird dabei auf die vorstehenden Ausführungen verwiesen und nachfolgend lediglich auf die Unterschiede eingegangen. Im Gegensatz zu der vorstehend beschriebenen Ausführungsform der Füllstandsbestimmungseinrichtung 1 sind die Elektroden 6 und 10 nicht abwechselnd zueinander angeordnet. Vielmehr sind mehrere erste Elektrode 6 einerseits und mehrere Elektroden 10 andererseits jeweils benachbart, insbesondere geodätisch übereinander, angeordnet.

Insoweit liegen eine erste Reihe an benachbarten ersten Elektroden 6 sowie eine zweite Reihe an benachbarten zweiten Elektroden 10 vor. Diese beiden Reihen sind bevorzugt parallel beabstandet zueinander angeordnet. Weil - analog zu den vorstehenden Ausführungen - die Elektroden 6 und 10 gegeneinander angewinkelt sind, liegt jeder ersten Elektrode 6 eine zweite Elektrode 10 gegenüber. Bevorzugt sind die ersten Elektroden 6, insbesondere alle ersten Elektroden 6, in einer ersten Ebene angeordnet und/oder die zweiten Elektroden 10, insbesondere alle zweiten Elektroden 10, in einer zweiten Ebene. Insoweit liegt eine planare Anordnung der ersten Elektroden 6 und/oder der zweiten Elektroden 10 vor. Die beiden Ebenen sind gegeneinander angewinkelt.

Dies ist in der in der Figur 5 gezeigten Schnittdarstellung der Füllstandsbestimmungseinrichtung 1 deutlich zu erkennen. Wiederum rein beispielhaft angedeutet sind hier die Feldlinien 8, die jeweils zwischen einer der ersten Elektroden 6 und einer der zweiten Elektroden 10 auftreten können.

Mit Hilfe der gezeigten Ausgestaltung der Füllstandsbestimmungseinrichtung 1 wird - unabhängig von der realisierten Ausführungsform - eine besonders hohe Genauigkeit bei der Bestimmung des Füllstands erzielt. Zudem ist die Füllstandsbestimmungseinrichtung 1 wesentlich unempfindlicher gegenüber Änderungen des Aggregatzustands des Fluids, beispielsweise gegenüber Gefrieren des Fluids, als bekannte Füllstandsbestimmungseinrichtungen 1. Bei der Bestimmung des Füllstands wird jeweils eine Verschaltung einer der Elektroden, beispielsweise der ersten Elektrode 6 mit der jeweils unmittelbar gegenüberliegenden zweiten Elektrode 10 oder aber der ersten Elektrode 6 oder der zweiten Elektrode 10 mit einer der anderen ersten Elektroden 6 oder einer der anderen zweiten Elektroden 10 vorgenommen.

Die jeweils miteinander verschalteten Elektroden werden mit elektrischer Spannung beaufschlagt, beispielsweise mit einer sinusförmigen Wechselspannung oder mit mehreren sinusförmigen Wechselspannungen, die voneinander verschiedene Frequenzen aufweisen und nacheinander an die Elektroden angelegt werden. Auf diese Art und Weise kann der Scheinwiderstand des durch die Elektroden jeweils ausgebildeten Kondensators ermittelt werden, der zumindest von dem Füllstand des Fluidbehälters abhängig ist. Wahlweise kann auch eine Spannung anderer Form, beispielsweise eine Rechteckspannung, eine Dreieckspannung oder dergleichen, angelegt werden, welche bezüglich ihrer Frequenzzusammensetzung dem gewünschten Spektrum an Messfrequenzen entspricht. Eine spektrale Auswertung des Scheinwiderstands kann zusätzlich Informationen über die Zusammensetzung des Fluids liefern und somit beispielsweise zur Qualitätskontrolle durchgeführt werden.

Beispielsweise kann eine Auswertung pro Kondensator getroffen werden, die lediglich darauf schließen lässt, dass zwischen den, den Kondensator ausbildenden Elektroden, beispielsweise den Elektroden 6 und 10, Fluid vorliegt oder nicht. Alternativ kann auch eine kontinuierliche Auswertung realisiert werden, die beispielsweise eine Absolutfüllhöhe als Ergebnis liefert. Wird wenigstens eine der Elektroden 6 beziehungsweise 10 oder ein von diesem gebildeter Kondensator als Referenz genutzt, so lassen sich Abhängigkeiten von Temperaturprofilen oder Schichtungsprofilen kompensieren, was bei einer kontinuierlichen Kondensatoranordnung über die gesamte Füllstandshöhe unter Umständen nicht möglich wäre.

Die als Referenz dienende Elektrode 6 beziehungsweise 10 beziehungsweise der als Referenz dienende Kondensator wird je nach Bedarf ausgewählt, was auf unterschiedliche Art und Weise erfolgen kann. Zum einen kann eine statische Auswahl vorliegen, wobei die Elektrode 6 oder 10 beziehungsweise der Kondensator derart ausgewählt wird, dass er permanent mit Fluid benetzt ist oder zumindest im Bereich des Fluids vorliegt. Die Auswahl kann jedoch auch dynamisch erfolgen, wobei beispielsweise stets derjenige Kondensator verwendet wird, welcher unmittelbar unterhalb eines lediglich teilweise benetzten Kondensators vorliegt. Insoweit wird bevorzugt der erste vollständig von dem Fluid benetzte Kondensator ausgewählt.

Mittels eines Durchschaltens der Elektroden 6 und 10 sind zum einen eine genaue Bestimmung des Füllstands und zum anderen eine Diagnose der Kondensatoren beziehungsweise der Elektroden 6 und 10 möglich. Durch geeignete Verfahren kann somit die Füllstandsbestimmungseinrichtung 1 auch zur Bestimmung des Füllstands eingesetzt werden, wenn eine oder mehrere der Elektroden 6 und 10 defekt sind, indem statt dessen benachbarte, insbesondere unmittelbar benachbarte intakte Elektroden 6 und 10 herangezogen werden.

## Patentansprüche

1. Füllstandsbestimmungseinrichtung (1) zur kapazitiven Bestimmung des Füllstands in einem Fluidbehälter, mit mehreren ersten Elektroden (6) sowie mehreren zweiten Elektroden (10), die einem Innenraum des Fluidbehälters zugewandt oder in dem Innenraum angeordnet oder anordenbar sind, wobei die ersten Elektroden (6) und die zweiten Elektroden (10) derart angeordnet sind, dass, im Querschnitt oder Längsschnitt gesehen, Mittelebenen (12) der ersten Elektroden (6) und Mittelebenen (13) der zweiten Elektroden (10) gegeneinander angewinkelt sind, **dadurch gekennzeichnet, dass** die ersten Elektroden (6) und die zweiten Elektroden (10) im Querschnitt oder Längsschnitt gesehen V-förmig zueinander sowie in einer Richtung abwechselnd angeordnet sind, und wobei jeweils eine der ersten Elektroden (6) und eine der zweiten Elektroden (10) in einer gemeinsamen Ausnehmung (11) angeordnet sind, die an einem Trägerelement (2) der Füllstandsbestimmungseinrichtung (1) ausgebildet ist.

2. Füllstandsbestimmungseinrichtung nach Anspruch 1, **dadurch gekennzeichnet, dass** die erste Elektrode (6) und die zweite Elektrode (10) unmittelbar benachbart zueinander angeordnet sind.

3. Füllstandsbestimmungseinrichtung nach einem der vorhergehenden Ansprüche, **dadurch gekennzeichnet, dass** die erste Elektrode (6) und die zweite Elektrode (10) auf demselben Substrat angeordnet und/oder ausgebildet sind.

4. Füllstandsbestimmungseinrichtung nach einem der vorhergehenden Ansprüche, **dadurch gekennzeichnet, dass** die erste Elektrode (6) und/oder die zweite Elektrode (10) in einer auf der jeweiligen Mittelebene (12, 13) senkrecht stehenden Richtung plan oder wenigstens bereichsweise gekrümmt, insbesondere über die gesamte Erstreckung in dieser Richtung gekrümmt, verlaufen.

5. Füllstandsbestimmungseinrichtung nach einem der vorhergehenden Ansprüche, **dadurch gekennzeichnet, dass** die erste Elektrode (6) und/oder die zweite Elektrode (10), im Querschnitt oder Längsschnitt gesehen, jeweils eine Längsmittelachse aufweisen, die parallel zu einer eine Vertikalmittelachse des Fluidbehälters (2) aufnehmenden oder senkrecht auf ihr stehenden gedachten Ebene angeordnet ist.

6. Füllstandsbestimmungseinrichtung nach einem der vorhergehenden Ansprüche, **dadurch gekennzeichnet, dass** eine Vielzahl von ersten Elektroden (6) mit zueinander parallelen Mittelebenen (12) und/oder eine Vielzahl von zweiten Elektroden (10) mit zueinander parallelen Mittelebenen (13) vorgesehen sind/ist.

7. Fluidbehälteranordnung, mit einem Fluidbehälter und einer Füllstandsbestimmungseinrichtung (1) nach einem oder mehreren der vorhergehenden Ansprüche.

## Claims

1. Level meter (1) for determining capacitively the filling level in a fluid container, comprising a plurality of first electrodes (6) and a plurality of second electrodes (10) which are turned towards an inner chamber of the fluid container or are arranged or can be arranged in the inner chamber, wherein the first electrodes (6) and the second electrodes (10) are arranged such that, as viewed in cross-section or longitudinal cross-section, central planes (12) of the first electrodes (6) and central planes (13) of the second electrodes (10) are angled relative to one another, **characterised in that** the first electrodes (6) and the second electrodes (10) are arranged, as viewed in cross-section or longitudinal cross-section, in a V-shape relative to one another and alternating in one direction and wherein one of the first electrodes (6) and one of the second electrodes (10) are arranged in a common recess (11) which is formed on a support element (2) of the level meter (1).

2. Level meter according to claim 1, **characterised in that** the first electrode (6) and the second electrode (10) are arranged to be immediately adjacent to one another.

3. Level meter according to any of the preceding claims, **characterised in that** the first electrode (6) and the second electrode (10) are arranged and/or formed on the same substrate.

4. Level meter according to any of the preceding claims, **characterised in that** the first electrode (6) and/or the second electrode (10) are planar in a direction perpendicular to the respective central plane (12, 13) or are at least partly curved, in particular are curved over the whole length in this direction.

5. Level meter according to any of the preceding claims, **characterised in that** the first electrode (6) and/or the second electrode (10), as viewed in cross section or longitudinal cross-section, each have a longitudinal centre line which is parallel to a plane receiving a vertical centre axis of the fluid container (2) or perpendicular to the latter.

6. Level meter according to any of the preceding claims, **characterised in that** a plurality of first electrodes (6) is/are provided with parallel central planes (12) and/or a plurality of second electrodes (10) with mutually parallel central planes (13).

7. Fluid container assembly, comprising a fluid container and a level meter (1) according to one or more of the preceding claims.

## Revendications

1. Dispositif de détermination du niveau de remplissage (1) pour la détermination capacitive du niveau de remplissage dans un récipient de fluide, avec plusieurs premières électrodes (6) ainsi que plusieurs secondes électrodes (10) qui sont agencées ou peuvent être agencées ou tournées vers un espace intérieur du récipient de fluide ou dans l'espace intérieur, dans lequel les premières électrodes (6) et les secondes électrodes (10) sont agencées de telle manière que vu en section transversale ou coupe longitudinale, des plans médians (12) des premières électrodes (6) et des plans médians (13) des secondes électrodes (10) soient pliés les uns contre les autres, **caractérisé en ce que** les premières électrodes (6) et les secondes électrodes (10) sont agencées vu en section transversale ou coupe longitudinale en forme de V les unes par rapport aux autres ainsi qu'en alternance dans une direction, et dans lequel respectivement une des premières électrodes (6) et une des secondes électrodes (10) sont agencées dans un évidement commun (11) qui est réalisé au niveau d'un élément porteur (2) du dispositif de détermination de niveau de remplissage (1).

2. Dispositif de détermination de niveau de remplissage selon la revendication 1, **caractérisé en ce que** la première électrode (6) et la seconde électrode (10) sont agencées de manière directement contiguë l'une à l'autre.

3. Dispositif de détermination de niveau de remplissage selon l'une quelconque des revendications précédentes, **caractérisé en ce que** la première électrode (6) et la seconde électrode (10) sont agencées et/ou réalisées sur le même substrat.

4. Dispositif de détermination de niveau de remplissage selon l'une quelconque des revendications précédentes, **caractérisé en ce que** la première électrode (6) et/ou la seconde électrode (10) s'étendent de manière plane dans une direction se trouvant perpendiculairement au plan médian (12, 13) respectif ou de manière courbée au moins par endroits, en particulier courbée sur la longueur entière dans cette direction.

5. Dispositif de détermination de niveau de remplissage selon l'une quelconque des revendications précédentes, **caractérisé en ce que** la première électrode (6) et/ou la seconde électrode (10) présentent vu en section transversale ou en coupe longitudinale respectivement un axe médian longitudinal, qui est agencé parallèlement à un plan imaginaire recevant un axe médian vertical du récipient de fluide (2) ou se trouvant perpendiculairement à celui-ci.

6. Dispositif de détermination de niveau de remplissage selon l'une quelconque des revendications précédentes, **caractérisé en ce qu'**une pluralité de premières électrodes (6) sont prévues avec des plans médians (12) parallèles l'un à l'autre et/ou une pluralité de secondes électrodes (10) sont prévues avec des plans médians (13) parallèles l'un à l'autre.

7. Agencement de récipient de fluide, avec un récipient de fluide et un dispositif de détermination de niveau de remplissage (1) selon l'une ou plusieurs quelconques des revendications précédentes.
